# EUROPEAN PATENT SPECIFICATION

(11) **EP 2 830 206 B1**
(45) Date of publication and mention of the grant of the patent: **31.03.2021**
(21) Application number: 13764376.3
(22) Date of filing: 06.02.2013
(51) Int. Cl.: H02M 7/48, G01R 19/165, H02H 3/253, H02H 3/34, H02H 7/122, H02P 27/06

(54) **POWER CONVERSION DEVICE**
LEISTUNGSWANDLER
DISPOSITIF DE CONVERSION DE PUISSANCE

(30) Priority: 23.03.2012 JP 2012066526
(43) Date of publication of application: 28.01.2015
(73) Proprietor: Hitachi Industrial Equipment Systems Co., Ltd., Tokyo 101-0022 (JP)
(72) Inventor: SUGIMOTO, Takuya, Narashino-shi Chiba 275-8611 (JP); ARAO, Yusuke, Narashino-shi Chiba 275-8611 (JP)
(74) Representative: Mewburn Ellis LLP
(86) International application number: PCT/JP2013/052660
(87) International publication number: WO 2013/140876

(56) References cited:
- EP-A1- 0 848 492
- JP-A- 2001 309 669
- JP-A- 2005 201 461
- JP-A- 2009 017 665
- JP-A- 2012 005 257
- JP-A- 2012 042 316
- US-A1- 2010 117 574
- MAIER R: "PROTECTION OF SQUIRREL-CAGE INDUCTION MOTOR UTILIZING INSTANTANEOUS POWER AND PHASE INFORMATION", IEEE TRANSACTIONS ON INDUSTRY APPLICATIONS, IEEE SERVICE CENTER, PISCATAWAY, NJ, US, vol. 28, no. 2, 1 March 1992 (1992-03-01), pages 376-380, XP000291664, ISSN: 0093-9994, DOI: 10.1109/28.126745

## Description

### Technical Field

The present invention relates to an inverter having a function of detecting an output phase loss.

### Background Art

JP 2012-5257 A (PTL 1) discloses a background art of this technical field. PTL 1 describes "output currents from an inverter device are detected by detection devices, and the polarities of the output currents are determined at determination devices. A determination device determines in which of six areas, divided according to zero-cross points and polarities, the output current is. A circuit determines ordered or disordered areal transition, and determination of the disordered areal transition represents that at least one phase is lost" (see ABSTRACT).

### Citation List

### Patent Literature

PTL 1: JP 2012-5257 A
PTL 2: EP0848492 A1 discloses method for diagnosing abnormality of circuit member of inverter driving controller for driving and controlling motor.
PTL 3: US2010/0117574 A1 discloses multi-phase motor driving device.
PTL 4: JP2001309669 A discloses phase failure sensing method for voltage source type inverter and its circuit.

### Summary of Invention

### Technical Problem

According to the invention disclosed in PTL 1, transition of the output current areas needs to be always monitored to determine a phase loss. PTL 1 does not describe determining which phase is lost. Further, according to the invention disclosed in PTL 1, the current detectors for three phases are required, which unfortunately makes the inverter expensive and large.

It is an object of the invention to provide an inexpensive small inverter which readily determines a phase loss to determine which phase is lost, compared with a related art including the invention disclosed in PTL 1.

### Solution to Problem

To solve the above-mentioned problems, the present invention employs, for example, structures as set forth in the claims.

The present invention provides a plurality of units in order to solve the above-mentioned problems. For example, the invention includes an inverter device, a current detection unit, an edge conversion unit, and an edge determination unit. The inverter device outputs three-phase alternating currents to drive an AC motor. The current detection unit detects at least two of the three-phase output currents from the inverter device. The edge conversion unit converts the current detected by the current detection unit into edges. The edge determination unit determines the phase loss based on the edge having been converted at the edge conversion unit. Further, the edge determination unit compares the converted edges with each other and detects the loss of at least one phase.

### Advantageous Effects of Invention

According to the present invention, a phase loss is readily determined only by detecting two-phase output currents from an inverter device to determine which phase is lost. Further, according to the present invention, an inexpensive and small inverter device is provided which has a function of detecting an output phase loss. Other problems, structures, and effects will be apparent from the following description of embodiments.

### Brief Description of Drawings

Fig. 1 is an exemplary diagram of an inverter including at least two current detectors and configured to detect an output phase loss.
Fig. 2 shows an exemplary relationship between a current waveform and edges.
Fig. 3 is an exemplary flowchart showing the process of an edge determination unit.
Fig. 4 shows an exemplary relationship between the current waveforms and the edges when a v-phase is lost.
Fig. 5 is an exemplary detailed diagram of the inverter device.
Fig. 6 shows an exemplary relationship between the current waveforms and the edges when a u-phase lower arm is lost.
Fig. 7 shows an exemplary relationship between the current waveforms and the edges when a v-phase lower arm is lost.

### Description of Embodiments

Embodiments will be described below using the drawings.

### First embodiment

A configuration of an inverter configured to detect an output phase loss using at least two current detectors will be described in the present embodiment.

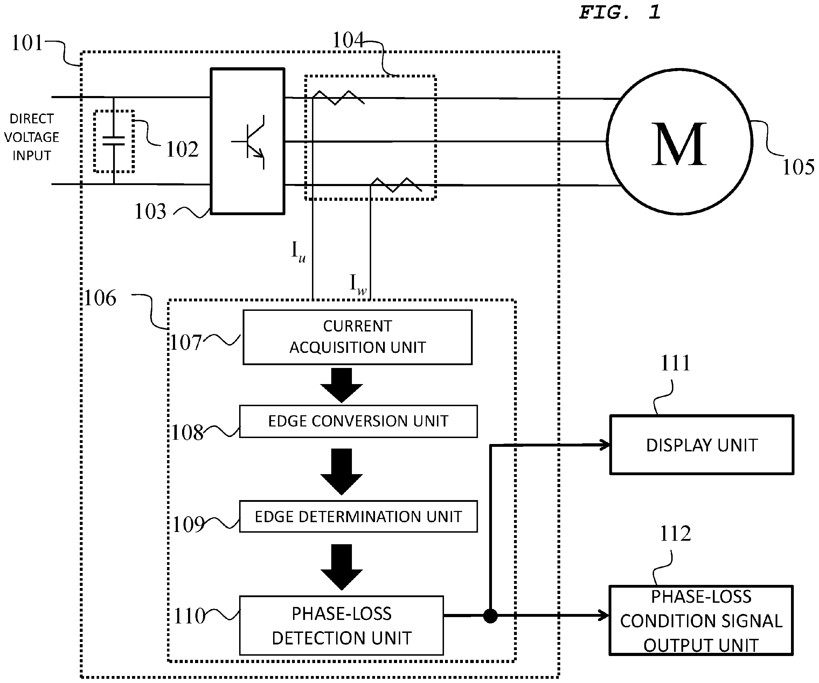

Fig. 1 is an exemplary diagram of the inverter configured to detect an output phase loss using at least two current detectors, according to the present embodiment.

The inverter 101 includes a smoothing capacitor 102, an inverter device 103, a current detector 104, an AC motor 105, a phase-loss detection module 106, a current acquisition unit 107, an edge conversion unit 108, an edge determination unit 109, and a phase-loss detection unit 110.

The smoothing capacitor 102 smoothes a DC voltage. The inverter device 103 converts the smoothed DC voltage to an AC voltage. The current detector 104 detects two-phase currents of, for example, u-phase and w-phase from among three-phase output currents from the inverter device 103. The AC motor 105 is driven by an output from the inverter device 103. The phase-loss detection module 106 acquires an output current feedback signal from the current detector 104.

An internal structure of the phase-loss detection module 106 will be described below.

The current acquisition unit 107 acquires the output current feedback signal from the current detector 104. The edge conversion unit 108 converts the output current feedback signal acquired at the current acquisition unit 107 into edges. The edge determination unit 109 determines the presence/absence and the pattern of the edge converted at the edge conversion device 108. The phase-loss detection unit 110 determines the detection of the phase loss based on the determination of the phase loss at the edge determination device 109. A display unit 111 displays the condition of the phase-loss detection unit 110 thereon. A phase-loss condition signal output unit 112 outputs the condition of the phase-loss detection unit 110.

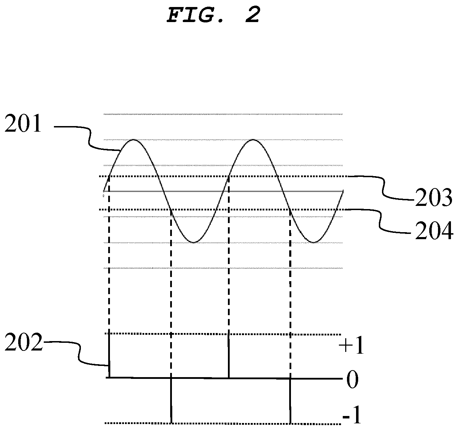

Fig. 2 shows an exemplary relationship between a current waveform and edges.

An electric current 201 is acquired from the detector 104 mounted to, for example, the u-phase. A rising edge threshold 203 is set to, for example, a value of +5% of the rated current, no-load current, or the like of the AC motor to be driven. A falling edge threshold 204 is set to, for example, a value of -5% of the rated current, no-load current, or the like of the AC motor to be driven. The thresholds are set to distinguish a normal current value from a phase-loss current value when the electric current 201 passes near a zero point. An edge 202 rises to +1 at the moment when the value of the current 201 exceeds the rising edge threshold 203, drops to -1 at the moment when the value of the current exceeds the falling edge threshold 204, and is otherwise at 0.

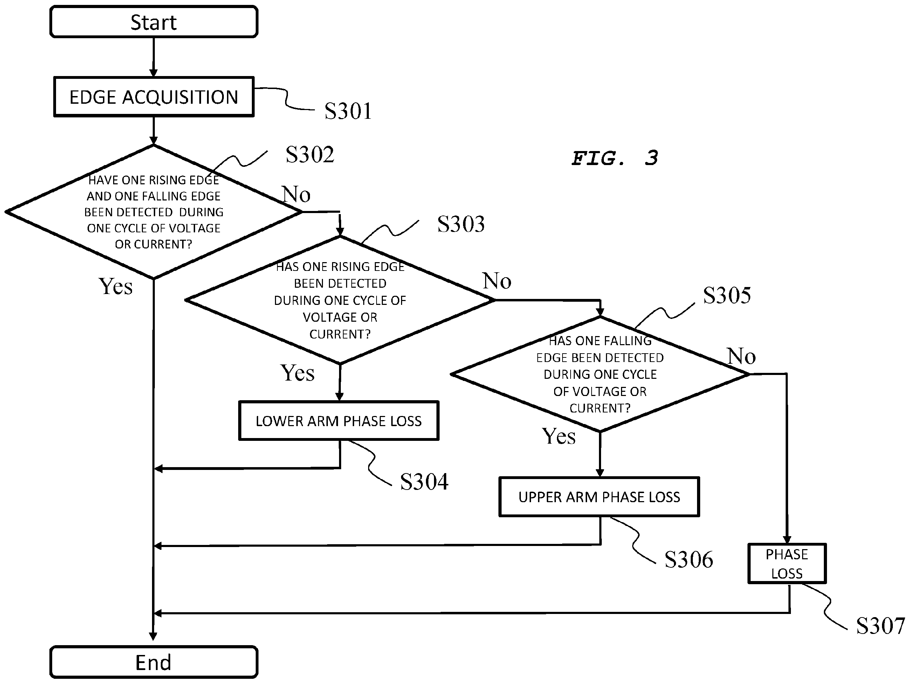

Fig. 3 is an exemplary flowchart showing the process of the edge determination unit 109.

The edge determination unit 109 has an edge acquisition process S301 including, for example, u-phase rising/falling edge detection step S302, rising edge detection-determining step S303, lower-arm u-phase loss processing step S304, falling edge detection-determining step S305, upper-arm u-phase loss processing step S306, and phase-loss detection step S307. The edge determination unit 109 determines three types of phase losses, i.e., an upper-arm phase loss, a lower-arm phase loss, and a wire phase loss of the AC motor or upper and lower arm phase losses.

In the edge acquisition process S301, a rising edge is acquired when the edge converted at the edge conversion unit 108 has a value of +1, a falling edge is acquired when the edge has a value of -1, and no edge is acquired when the edge has a value of 0. Rising/falling edge detection-determining step S302 determines whether one rising edge and one falling edge of the edges acquired from the edge acquisition process S301 have been detected during one cycle of an output voltage or an obtained current. When detection-determining step S302 results in Yes, it is determined that no phase is lost, and when step S302 results in No, the process proceeds to next rising edge detection-determining step S303. Rising edge detection-determining step S303 determines whether one rising edge has been detected during one cycle of an output voltage or an obtained current. When detection-determining step S303 results in Yes, a lower-arm phase-loss condition is output in lower-arm phase-loss processing step S304, and when step S303 results in No, the process proceeds to next falling edge detection-determining step S305. Falling edge detection-determining step S305 determines whether one falling edge has been detected during the one cycle of the output voltage or the obtained current. When detection-determining step S305 results in Yes, an upper-arm phase-loss condition is output in upper-arm phase-loss processing step S306, and when step S305 results in No, a u-phase loss condition is output in phase-loss detection step S307. In the present embodiment, a determination process carried out during the one cycle of the output voltage or the obtained current has been described; however, the process may be carried out during several cycles.

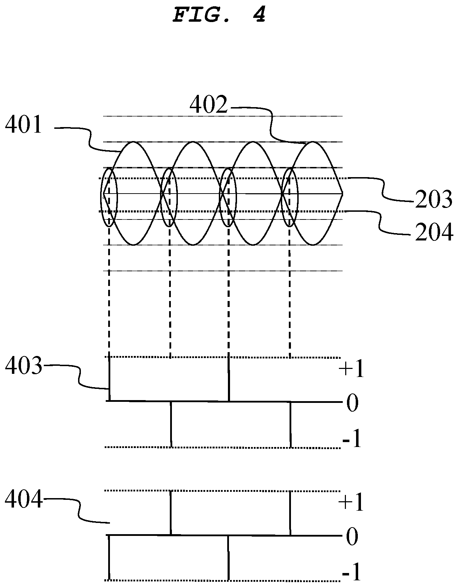

Fig. 4 shows an exemplary relationship between the current waveforms and the edges when a v-phase is lost.

A u-phase current 401 and a w-phase current 402 are shown with a v-phase loss. A u-phase edge 403 rises to +1 when the u-phase current 401 has a value equal to the rising edge threshold 203, drops to -1 when the u-phase current has a value equal to the falling edge threshold 204, and is otherwise at 0. A w-phase edge 404 rises to +1 when the w-phase current 402 has a value equal to the rising edge threshold 203, drops to -1 when the w-phase current has a value equal to the falling edge threshold 204, and is otherwise at 0. The edge determination unit detects the simultaneous generation of the u-phase edge 403 and the w-phase edge 404 to determine a v-phase loss in which a current is not detected.

The phase-loss detection unit 110 notifies an external module of the phase-loss detection module 106 of the phase-loss condition. For example, after the phase-loss detection unit 110 detects the phase loss, the display unit 111 shown in Fig. 1 is notified of the phase-loss condition through communication or the like, and the phase-loss condition is displayed thereon. Further, the phase-loss detection unit 110 notifies a phase-loss condition output unit 112 of the phase-loss condition. The phase-loss condition output unit 112 outputs a phase-loss detection signal for externally notifying of the phase-loss condition through a terminal or the like.

### Second embodiment

In the present embodiment, a structure for detecting an arm phase-loss in the inverter device 103 shown in Fig. 1 will be described.

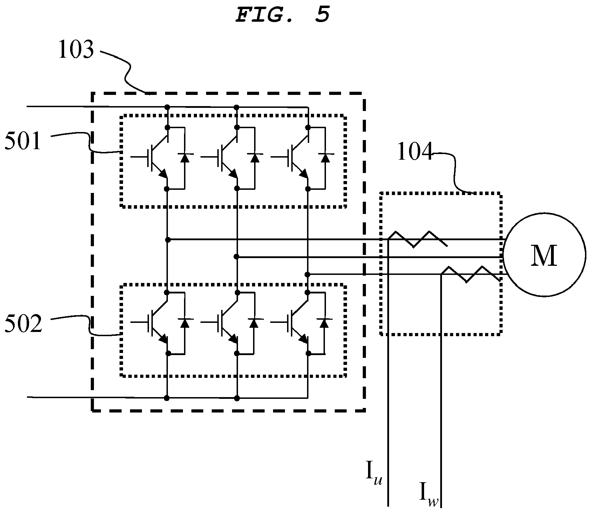

Fig. 5 is an exemplary detailed diagram of the inverter device. The inverter device 103 includes six arms of an upper arm group 501 and a lower arm group 502. The inverter device 103 includes u-phase upper and lower arms, w-phase upper and lower arms, and v-phase upper and lower arms, when viewed from the current detector 104.

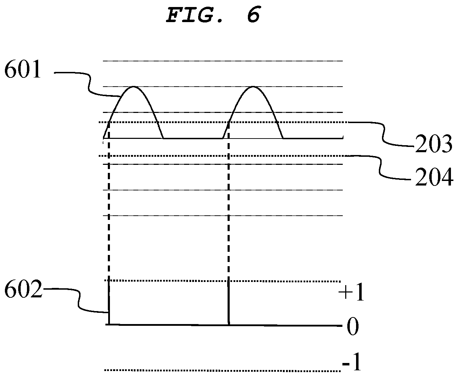

Fig. 6 shows an exemplary relationship between the current waveforms and the edges when the u-phase lower arm is lost.

A lower-arm phase-loss current 601 is obtained from, for example, the current detector 104 mounted to the u-phase. An edge 602 rises to +1 at the moment when the value of the lower-arm phase-loss current 601 exceeds the rising edge threshold 203, and stays at 0 since there is no moment at which the lower-arm phase-loss current exceeds the falling edge threshold 204. When the falling edge is not detected, it can be determined that the lower arm of the phase, in which the current is detected, is lost.

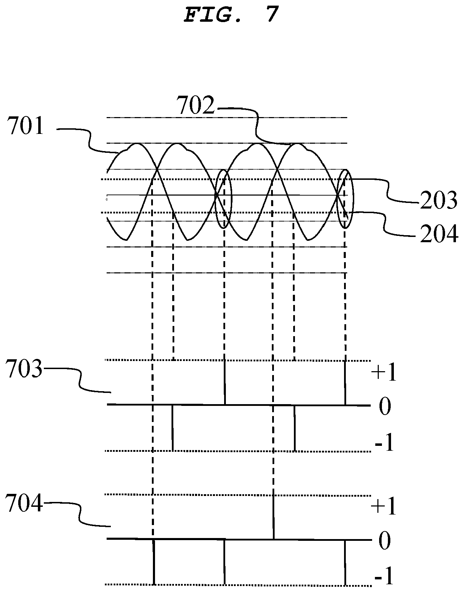

Fig. 7 shows an exemplary edge determination unit when a v-phase lower arm is lost.

A u-phase current 701 and a w-phase current 702 are shown with a v-phase lower-arm loss. The u-phase edge 703 rises to +1 when the u-phase current 701 has a value equal to the rising edge threshold 203, falls to -1 when the u-phase current has a value equal to the falling edge threshold 204, and is otherwise at 0. A w-phase edge 704 rises to +1 when the w-phase current 702 has a value equal to the rising edge threshold 203, falls to -1 when the w-phase current has a value equal to the falling edge threshold 204, and is otherwise at 0. The u-phase edge 703 and the w-phase edge 704 have a pattern in which the w-phase edge 704, the u-phase edge 703, the u-phase edge 703, and the w-phase edge 704 are generated in that order. In the case of no phase loss, the u-phase edge 703 and the w-phase edge 704 are alternately generated, so that a difference between the u-phase edge and the w-phase edge allows determination of a v-phase lower-arm loss in which the current is not detected. Similarly, reverse rotation of the AC motor 105 yields an edge generation pattern in which the u-phase edge 703, the w-phase edge 704, the u-phase edge 703, and the w-phase edge 704 are generated in that order, when the v-phase lower arm is lost.

The phase-loss detection unit 110 notifies an external module of the phase-loss detection module 106 of the phase-loss condition. For example, after the phase-loss detection unit 110 detects the phase loss, the display unit 111 shown in Fig. 1 is notified of the phase loss through communication or the like, and the phase-loss condition is displayed thereon. Further, the phase-loss detection unit 110 notifies a phase-loss condition output unit 112 of the phase-loss condition. The phase-loss condition output unit 112 outputs a phase-loss detection signal for externally notifying of the phase-loss condition through a terminal or the like.

The present invention is not limited to the above-mentioned embodiments, but includes various modifications. For example, the above-mentioned embodiments have been described in detail for easily understanding the present invention; however, the present invention is not always limited to an inverter including all of the above-mentioned structures. Further, the structure of an embodiment may be partially replaced with a structure of another embodiment, and the structure of an embodiment may be added to the structure of another embodiment. Still further, another structure may be partially added to, removed from, and replaced with structures of the embodiments.

The structures, functions, processing units, processing devices, and the like described above may be partially or wholly achieved with hardware, for example, by being designed as an integrated circuit. The structures, functions, and the like described above may be achieved with software in such a manner that a processor interprets and executes programs achieving functions. The programs, tables, files, and the like have information for achieving the functions, and the information may be put in a recording device such as a memory, hard disk, and solid state drive (SSD), or a recording medium such as an IC card, SD card, and DVD.

A control line or an information line is shown which is considered to be necessary for description, and all control lines or information lines are not necessarily shown to describe a product. Actually, it may be considered that almost all the structures are connected to each other.

### Reference Signs List

- 101: inverter
- 102: smoothing capacitor
- 103: inverter device
- 104: current detector
- 105: AC motor
- 106: phase-loss detection module
- 107: current acquisition unit
- 108: edge conversion unit
- 109: edge determination unit
- 110: phase-loss detection unit
- 111: display unit
- 112: phase-loss condition signal output unit
- 201: electric current
- 202: edge
- 203: rising edge threshold
- 204: falling edge threshold
- S301: edge acquisition process
- S302: rising edge/falling edge detection-determining step
- S303: rising edge detection-determining step
- S304: lower arm phase-loss processing step
- S305: falling edge detection-determining step
- S306: upper arm phase-loss processing step
- S307: phase-loss detection step
- 401: u-phase current
- 402: w-phase current
- 403: u-phase edge
- 404: w-phase edge
- 501: upper arm group
- 502: lower arm group
- 601: lower-arm phase-loss current
- 602: edge
- 701: u-phase current
- 702: w-phase current
- 703: u-phase edge
- 704: w-phase edge

## Claims

1. An inverter (101) comprising:
an inverter device (103) configured to output three-phase alternating currents to drive an AC motor (105);
a current detection unit configured to detect current waveforms of two phases from among the three-phase output currents from the inverter device;
an edge conversion unit (108) configured to produce a respective edge signal from each current waveform detected by the current detection unit, the edge signal having a positive value at the moment when the value of the respective current waveform passes a first threshold from a lower to a higher value and a negative value at the moment when the value of the respective current waveform passes a second threshold from a higher to a lower value and otherwise zero; and
an edge determination unit (109) configured to determine a pattern of each series of edge signals from each current waveform by determining the presence or absence of edge signals within the series,
wherein the edge determination unit (109) is arranged to detect loss of at least one phase by comparing the patterns of the series of edge signals from each current waveform with each other to determine whether a phase-loss condition is met.

2. The inverter (101) according to claim 1, wherein the edge conversion unit (108) compares each current waveform detected by the current detection unit with the first and second thresholds to generate a positive value edge signal when the current has a value equal to a rising edge threshold (203) value, and generate a negative value edge signal when the current has a value equal to a falling edge threshold value (204), and generate a zero signal otherwise.

3. The inverter (101) according to claim 1, comprising:
a display unit (111) configured to display information of the inverter,
wherein, when the determination of the edge determination unit (109) results in a phase loss, the phase-loss condition is displayed on the display unit (111) or externally notified of.

4. The inverter (101) according to claim 1, wherein the inverter device includes six arms, and
the edge conversion unit (108) provides the edge signal for a phase with current detection when an upper or lower arm phase is lost in a phase without current detection, and the phase loss is detected based on an edge signal pattern having edge signals different from those of a normal edge signal pattern in the edge determination unit (109).

## Patentansprüche

1. Wechselrichter (101), umfassend:
eine Wechselrichtervorrichtung (103), die ausgelegt ist, um dreiphasige Wechselströme auszugeben, um einen Wechselstrommotor (105) anzutreiben;
eine Stromdetektionseinheit, die ausgelegt ist, um Stromkurven von zwei Phasen aus den dreiphasigen Ausgangsströmen der Wechselrichtervorrichtung zu detektieren;
eine Flankenumwandlungseinheit (108), die ausgelegt ist, um ein jeweiliges Flankensignal von jeder von der Stromdetektionseinheit detektierten Stromkurve zu erzeugen, wobei das Flankensignal einen positiven Wert zum Zeitpunkt aufweist, wenn der Wert der jeweiligen Stromkurve einen ersten Schwellwert von einem niedrigeren zu einem höheren Wert durchläuft und einen negativen Wert zu dem Zeitpunkt aufweist, wenn der Wert der jeweiligen Stromkurve einen zweiten Schwellwert von einem höheren zu einem niedrigeren Wert durchläuft, und andernfalls Null ist; und
eine Flankenbestimmungseinheit (109), die ausgelegt ist, um ein Muster jeder Reihe von Flankensignalen von jeder Stromkurve durch Bestimmen der Gegenwart oder Abwesenheit von Flankensignalen innerhalb der Reihe zu bestimmen,
wobei die Flankenbestimmungseinheit (109) angeordnet ist, um den Verlust von zumindest einer Phase zu detektieren, indem die Muster der Reihe von Flankensignalen von jeder Stromkurve miteinander verglichen werden, um zu bestimmen, ob ein Phasenverlust-Zustand gegeben ist.

2. Wechselrichter (101) nach Anspruch 1, wobei die Flankenumwandlungseinheit (108) jede von der Stromdetektionseinheit detektierte Stromkurve mit dem ersten und dem zweiten Schwellwert vergleicht, um ein Flankensignal mit positivem Wert zu erzeugen, wenn der Strom einen Wert aufweist, der gleich einem Steigende-Flanke-Schwellwert (203) ist, und ein Flankensignal mit negativem Wert zu erzeugen, wenn der Strom einen Wert aufweist, der gleich einem Fallende-Flanke-Schwellwert (204) ist, und andernfalls ein Nullsignal zu erzeugen.

3. Wechselrichter (101) nach Anspruch 1, umfassend:
eine Anzeigeeinheit (111), die ausgelegt ist, um Informationen des Wechselrichters anzuzeigen,
wobei, wenn die Bestimmung der Flankendetektionseinheit (109) einen Phasenverlust ergibt, der Phasenverlust-Zustand auf der Anzeigeeinheit (111) angezeigt wird oder extern mitgeteilt wird.

4. Wechselrichter (101) nach Anspruch 1, wobei die Wechselrichtervorrichtung sechs Zweige umfasst, und
die Flankenumwandlungseinheit (108) das Flankensignal für eine Phase mit Stromdetektion bereitstellt, wenn eine Phase eines oberen oder unteren Zweigs in einer Phase ohne Stromdetektion verloren geht, und der Phasenverlust auf der Grundlage des Flankensignalmusters mit Flankensignalen, die sich von denen eines normalen Flankensignalmusters unterscheiden, in der Flankenbestimmungseinheit (109) detektiert wird.

## Revendications

1. Onduleur (101) comprenant :
un dispositif onduleur (103) configuré pour délivrer en sortie des courants alternatifs triphasés pour entraîner un moteur à courant alternatif, CA, (105) ;
une unité de détection de courant configurée pour détecter des formes d'onde de courant de deux phases parmi les courants de sortie triphasés en provenance du dispositif onduleur ;
une unité de conversion de front (108) configurée pour produire un signal de front respectif à partir de chaque forme d'onde de courant détectée par l'unité de détection de courant, le signal de front ayant une valeur positive au moment où la valeur de la forme d'onde de courant respective dépasse un premier seuil à partir d'une valeur moins élevée à une valeur plus élevée, et une valeur négative au moment où la valeur de la forme d'onde de courant respective passe un second seuil d'une valeur plus élevée à une valeur moins élevée, et sinon nulle ; et
une unité de détermination de front (109) configurée pour déterminer un motif de chaque série de signaux de front à partir de chaque forme d'onde de courant en déterminant la présence ou l'absence de signaux de front à l'intérieur des séries,
dans lequel l'unité de détermination de front (109) est agencée pour détecter une perte d'au moins une phase en comparant les motifs de la série de signaux de front de chaque forme d'onde de courant les uns avec les autres pour déterminer si une condition de perte de phase est remplie.

2. Onduleur (101) selon la revendication 1, dans lequel l'unité de conversion de front (108) compare chaque forme d'onde de courant détectée par l'unité de détection de courant avec les premier et second seuils pour générer un signal de front de valeur positive lorsque le courant a une valeur égale à une valeur d'un seuil de front montant (203), et générer un signal de front de valeur négative lorsque le courant a une valeur égale à une valeur d'un seuil de front descendant (204), et générer sinon un signal nul.

3. Onduleur (101) selon la revendication 1, comprenant :
une unité d'affichage (111) configurée pour afficher des informations de l'onduleur,
dans lequel, lorsque la détermination de l'unité de détermination de front (109) entraîne une perte de phase, la condition de perte de phase est affichée sur l'unité d'affichage (111) ou notifiée de manière externe.

4. Onduleur (101) selon la revendication 1, dans lequel le dispositif onduleurs comprend six bras, et
l'unité de conversion de front (108) fournit le signal de front pour une phase avec détection de courant lorsqu'une phase de bras supérieure ou inférieure est perdue dans une phase sans détection de courant, et la perte de phase est détectée sur la base d'un motif de signal de front ayant des signaux de front différents de ceux d'un motif de signal de front normal dans l'unité de détermination de front (109).
